Europäisches Patentamt

European Patent Office

Office européen des brevets

(19)

(11) Publication number: **0 330 701**
**A2**

(12) **EUROPEAN PATENT APPLICATION**

(21) Application number: **88102744.5**

(22) Date of filing: **10.04.85**

(51) Int. Cl.⁴: **F24J 2/04 , F24J 2/26**

(30) Priority: 18.09.84 JP 195599/84
18.09.84 JP 195600/84
18.09.84 JP 195601/84
18.09.84 JP 195602/84
18.09.84 JP 195603/84
23.10.84 JP 160739/84 U

(43) Date of publication of application:
**06.09.89 Bulletin 89/36**

(60) Publication number of the earlier application in
accordance with Art.76 EPC: **0 175 836**

(84) Designated Contracting States:
**DE**

(71) Applicant: **SHARP KABUSHIKI KAISHA**
**22-22 Nagaike-cho Abeno-ku**
**Osaka 545(JP)**

(72) Inventor: **Yoshikawa, Masaharu**
**1330-2 Toriya-cho**
**Kashiwara-shi Nara-ken(JP)**
Inventor: **Arai, Nobushige**
**3604-6 Kanmaki, Kanmaki-cho**
**Kitakatsuragi-gun Nara-ken(JP)**
Inventor: **Satomura, Masafumi**
**46-301, Kataokadai 3-1, Kanmaki-cho**
**Kitakatsuragi-gun Nara-ken(JP)**
Inventor: **Shinobu, Yoshiharu**
**785 Touichi-cho**
**Kashiwara-shi Nara-ken(JP)**
Inventor: **Takushima, Akira**
**24-506, Kataokadai 3-1, Kanmaki-cho**
**Kitakatsuragi-gun Nara-ken(JP)**
Inventor: **Tanaka, Syozo**
**734 Kume-cho**
**Kashiwara-shi Nara-ken(JP)**
Inventor: **Yanagisawa, Nobuhiro**
**1765-2 Mise-cho**
**Kashiwara-shi Nara-ken(JP)**

(74) Representative: **Patentanwälte TER MEER -**
**MÜLLER - STEINMEISTER**
**Mauerkircherstrasse 45**
**D-8000 München 80(DE)**

(54) **Heat collector.**

(57) A heat collector according to the invention, comprising:
- a plurality of elongated heat collector elements (11a; 39a, 49a, 75a) running parallel to each other, each heat collector element having at least one thermal media tube (27; 41; 51; 76) running in its longitudinal direction and allowing thermal media to pass through the inside, and sheet-form heat collector fins (26; 40; 50; 75b) connected to opposite sides of the thermal media tube for transferring heat,
- connector tubes (...; 42; ...; ...) for connecting the thermal media tubes of different heat collector elements to each other and to a heat collector driver system, and
- a support means for supporting said heat collector elements,
is characterized in that the heat collector elements (11a; 39a, 49a, 75a) are constructed as parts which are normally used to build a house.

FIG. 5

## HEAT COLLECTOR

The present invention relates to a solar heat collector as stated in the precharacterizing portion of claim 1.

A heat collector of this kind is already known from DE-A1 29 19 524. Said known heat collector comprising:
- a plurality of elongated heat collector elements running parallel to each other, each heat collector element having at least one thermal media tube running in its longitudinal direction and allowing thermal media to pass through the inside, and sheet-form heat collector fins connected to opposite sides of the thermal media tube for transferring heat,
- connector tubes for connecting the thermal media tubes of different heat collector elements to each other and to a heat collector driver system, and
- a support means for supporting said heat collector elements.

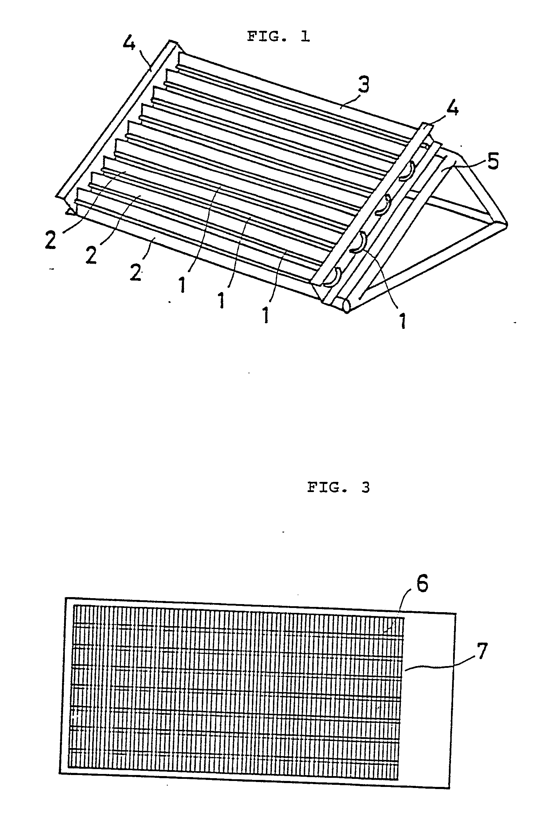

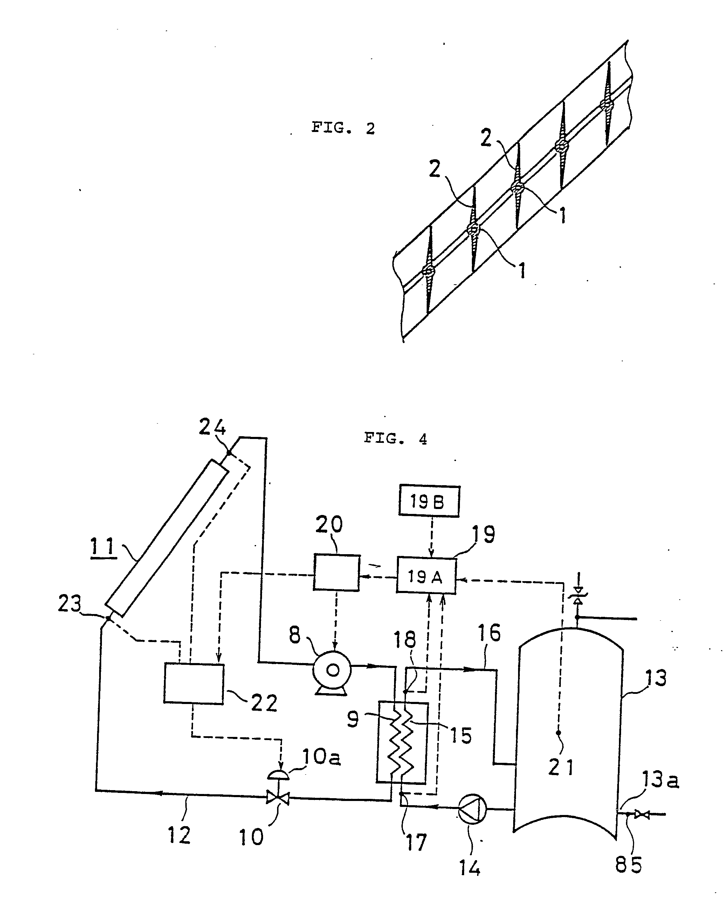

Fig. 1 is a perspective view of this known heat collector, whereas Fig. 2 is a sectional view thereof. The heat collector is provided with a plurality of heat collector elements (3) comprising the heating media tube (1) and a fin (2). These heat collector elements (3) be installed in parallel to a pair of base plates (4). This system sequentially connects adjacent heating media tubes secured to the base (5) or a number of fins (7) secured at right angles to the heating media tube (6) which is installed in the form of a snake movement as shown in Fig. 3. Nevertheless, when such a heat collector featuring the above configuration is installed on the roof of a conventional house or other building, it amy adversely effect the appearance of the building when compared to conventional plain-type heat collectors or heat collectors using a heat collector incorporating vacuum glass tubes. Likewise, when installing this heat collector on a new-built house, just as for conventional heat collectors, the owner needs to pay the price of the heat collectors together with a price of the roofing material.

It is an object of the present invention to provide a heat collector that completely eliminates visual disharmony with a house, providing a pleasant appearance of the house and yet providing substantially improved economy.

To achieve this object the heat collector according to the present invention is characterized in that the heat collector elements are constructed as parts which are normally used to build a house.

The heat collector according to the invention is shaped similar to housing materials such as roofing material or external wall materials so that it can harmoniously make up an integral part of the house either in the form of roofing material or wall material, thus providing dual functions, being a heat collector itself and part of the housing materials as well. Consequently, the heat collector embodied by the present invention does not cause disharmony with the overall view of the house after installation compared to the conventional heat collector on the roof, thus securely providing a very satisfactory design and pleasant appearance by being incorporated integrally in the house configuration. In addition, since the heat collector embodied by the present invention is provided with dual functions, being the heat collector and part of the housing materials as well, it sharply reduces the overall cost needed for the housing and heat collector so that total economy can be achieved. Furthermore, the heat collector embodied by the present invention is not only capable of competely being incorporated in the roof or wall of a house, but it is also possible for it to be integrally set up together with balcony handrails and the like, or with an external fence. Practical examples of applying heat collectors to these housing components are described later.

The present invention will be better understood from the detailed description given hereinbelow and the accompanying drawings which are given by way of illustration only, and thus are not limitative of the present invention and wherein:

Figure 1 is a perspective view of a conventional heat collector,

Figure 2 is the enlarged sectional view of a main part of the conventional heat collector,

Figure 3 is a front view of the conventional heat collector,

Figure 4 is a configuration of a heat collector system,

Figure 5 is the sectional view of an installed heat collector according to the invention,

Figure 6 is the sectional view taken on line A-A of Figure 5;

Figure 7 is the actual state in which the heat collector according to the invention has been installed,

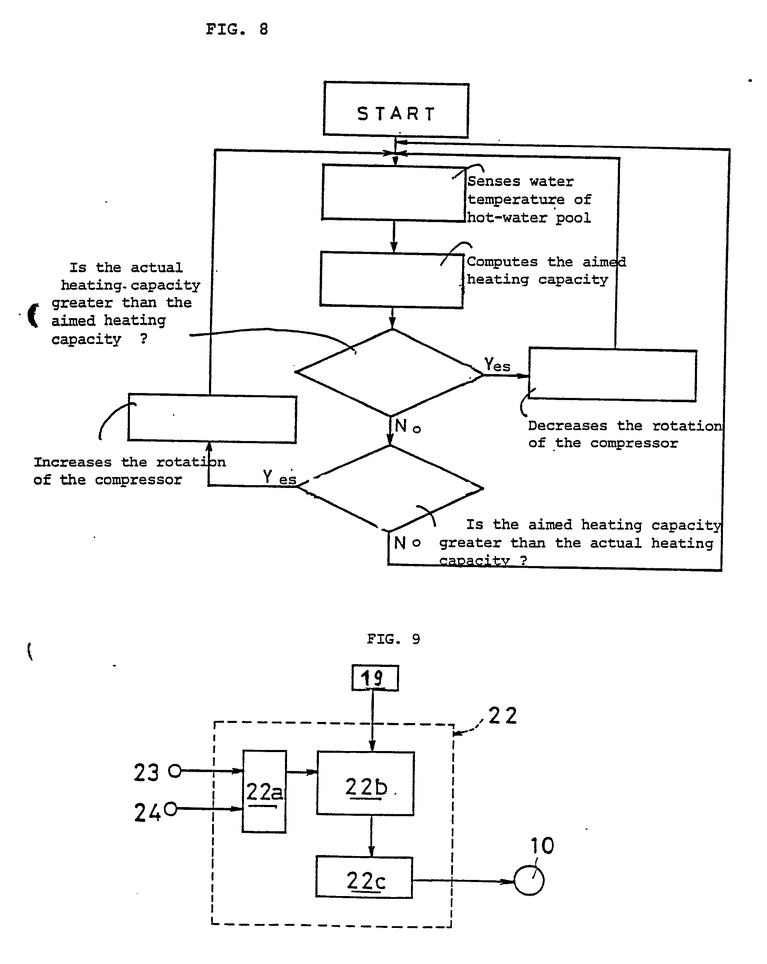

Figure 8 is a flowchart describing the procedure needed for controlling the capacity of a compressor of siad heat collector system

EP 0 330 701 A2

Figure 9 is the configuration of a heating media flow volume control circuit of said heat collector system,

Figure 10 is a chart showing the relationship between the difference in temperature and the amout of decompression;

Figures 11 (a), (b), and (c) are respectively charts showing different examples of a divided zone of deviation between the difference in temperature and the objective value of the difference in temperature;

Figure 12 is the line chart showing the relationship between the conductive amount of current delivered to an exapansion valve driver and the flow amount of the heating media;

Figure 13 is a chart showing the relationship between a 4-bit memory and the deviation zone;

Figure 14 is a sectional view of another preferred embodiment of a heat collector according to the invention,

Figure 15 is the sectional view of the heat collector taken on line B-B of Figure 14;

Figure 16 is a perspective view of an installed heat collector reflecting another preferred embodiment of the present invention;

Figure 17 is the sectional view of a main part taken on line C-C of Figure 16;

Figure 18 is the sectional view of the top and bottom parts of the installed heat collector shown in Figure 16;

Figures 19, 20, 21, and 22 are respectively the sectional views of still further preferred embodiments of the heat collectors reflecting the present invention;

Figure 23 is a perspective view of a still further preferred embodiment of the heat collector reflecting the present invention;

Figure 24 is a front view of the heat collector shown in Figure 23;

Figure 25 is a sectional view of the heat collector taken on line D-D of Figure 24;

Figure 26 is a perspective view of a still further preferred embodiment of a heat collector reflecting the present invention;

Figure 27 is a perspective view of a still further preferred embodiment of a heat collector reflecting the present invention;

Figures 28 (a), (b), (c), (d), and (e) are respectively the sectional views of heat collectors reflecting still further embodiments of the present invention;

Figure 29 is a perspective view of a still further preferred embodiment of the present invention;

Figure 30 is the sectional view of a heat collector reflecting a still further preferred embodiment of the present invention;

Figure 31 is the sectional view of a heat collector reflecting a still further preferred embodiment of the present invention;

Figures 32, 33 and 34 are respectively the flowcharts describing the procedure needed for controlling the capacity of the compressor,

Figure 35 is the configuration of another heat collector system,

Figure 36 is the flowchart describing the procedure needed for controlling the capacity of the compressor, and

Figure 37 is the configuration of a still another heat-collector system.

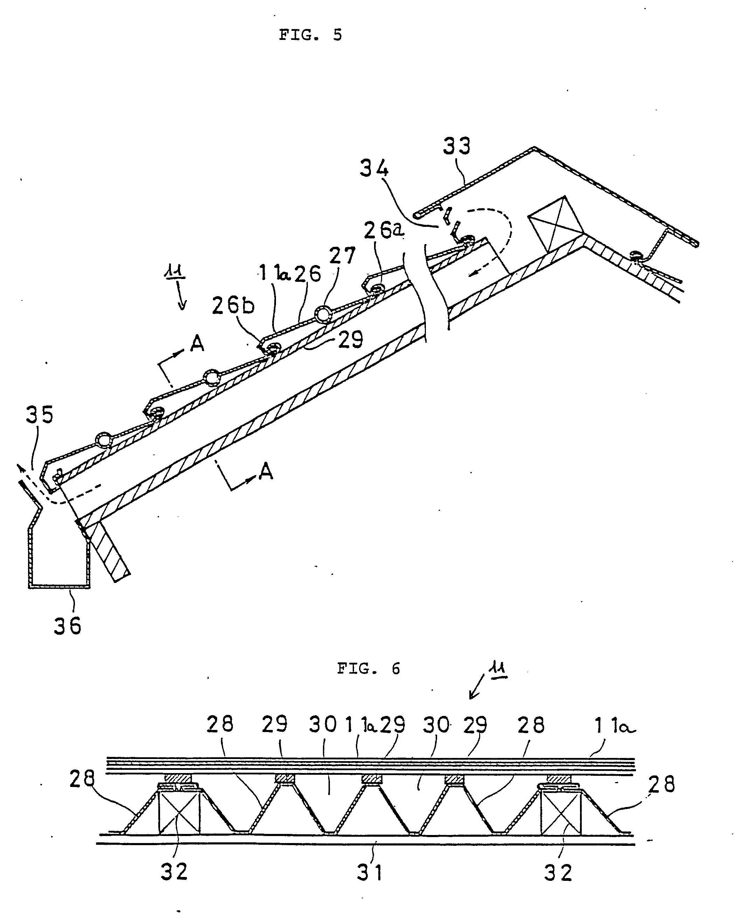

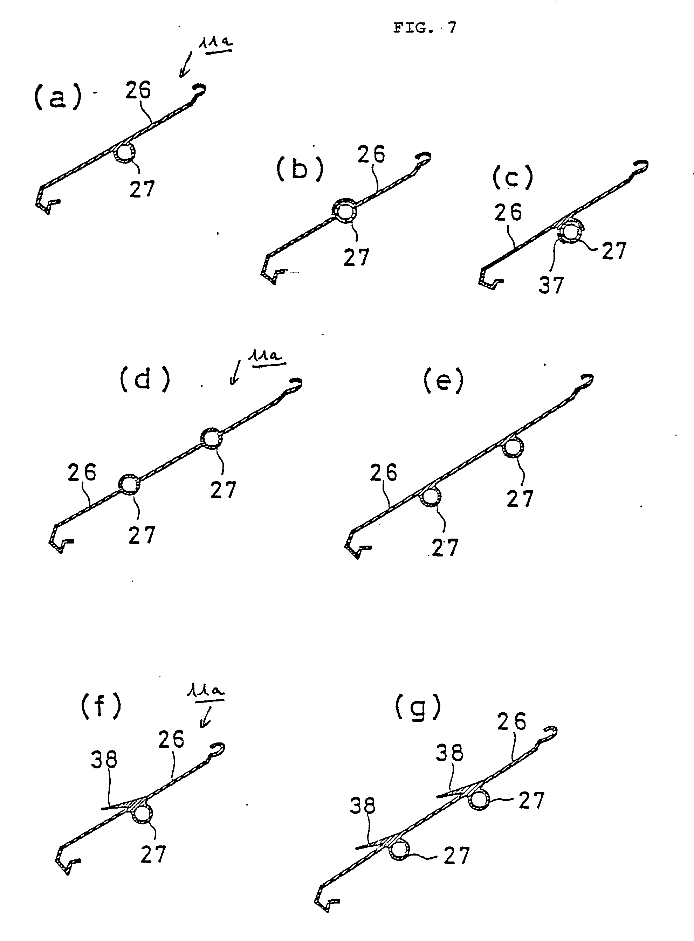

Referring now to the attached drawings a systematic diagram of a head-collector system is described in Figure 4. The solar heat collector system makes up a heat-pump system heat collector circuit (12) by sequentially connecting a compressor (8) that compresses and outputs heating media, a condensor (9) connected to the output of the compressor (8), an expansion valve (10) concurrently functioning as a squeezer, and a heat collector (11) that also concurrently functions as an evaporator, respectively. In addition, this system also incorporates a fluid heating circuit (16) by connecting the hot-water pool (13) storing fluid for delivery to the hot-water supply unit and air-conditioners, and a fluid heater (15) installed in a position outside the hot-water pool (13) via a circulation pump (14) and connected to the condensor (9) with which the heat-exchange relationship is formed. Figures 5, 6 and 7 respectively show the configuration of the heat collector (11) of the solar heat collector system. Figure 5 shows a sectional view of the main part of a preferred embodiment of the heat collector reflecting the present invention, whereas Figure 6 shows a sectional view of the het collector taken on line A-A of Figure 5. The heat collector shown in Figures 5 and 6 concurrently functions as an evaporator that can be installed on top of a roof. Each heat collector element (11a) of the heat collector (11) is made of aluminum, copper or the like, featuring satisfactory thermal conductivity, and is typically comprised of a sheet-shaped fin (26) set in a horizontal direction, and a thermal media tube (27) which is integrally formed in the center of the fin unit (26). The surface of the heat collector element (11a) is finished with dark colored coating featuring durable weatherability or with colored

3

aluminum oxide in order for the absorption of radiated sunbeams to be securely improved. A U-shaped upper coupler (26a) extending upward is provided at the upper end of the fin unit (26), and conversely, a lower coupler (26b) also U-shaped, extending downward is also provided at the bottom end of fin unit (26) so that the upper and lower heat collectors elements (11a) adjacent to each other can be coupled together by engagement of the upper and lower couplers (26a) and (26b). Reference number (28) indicates a dew receiver sheet supporting the heat collector (11) via the supporter member (29) made of synthetic rubber, "Neoprene" for example. The dew receiver sheet (28) is zigzag-shaped, while space (30) is provided between heat collector (11) and the dew receiver sheet (28). Since the dew receiver sheet (28) supports the heat collectors (11) via the Neoprene support member (29), this support member (29) concurrently functions as an insulator, so that heat can be shielded from the dew receiver sheet (28). Reference number (31) indicates the outdoor plate supporting the dew receiver sheet (28), while reference number (32) indicates the roof plate supporting rod, (33) the peak protector located on the tip portion of the roof, and reference number (34) indicates the ventilation hole through which atmospheric air is sent to space (30) and passes through it vertically downward before eventually being sent out of the exhaust outlet (35) located in the bottom part. Reference number (36) indicates a tub provided in the bottom part of the dew receiver sheet (28), while it collects rain water flowing over the surface of the heat collector (11) that makes up part of the roofing material and dew water behind the heat collector (11) caused by the temperature of the heat collector (11) being lower than the atmospheric temperature. When actually installing the heat collector (11) shown in Figure 5, it is also possible to incorporate the thermal media tube (27) so that it can be integrally shaped on the lower surface of fin unit (26) via an extrusion process as shown in Figure 7 (a) or by causing the center part of the fin unit (26) to be expanded in the direction of the upper surface to form a semi-sphere as shown in Figure 7 (b) before coupling the expanded part to he thermal media tube (27), or by installing the U-shaped supporting member (37) onto the bottom surface of fin unit (26) so that the supporting member (37) can be secured to the thermal media tube (27) as shown in Figure 7(c). Figures 7-(d) and 7(e) represent such a case in which two units of the thermal media tubes (27) are installed onto a piece of the heat collector element (11a) whereas Figures 7(f) and 7(g) denote such a case in which the thermal media tube (27) is installed onto the lower surface of fin unit (26) and the auxiliary fin (38) is installed on the upper surface of fin unit (26) as well. The auxiliary fin unit (38) improves the capacity of the heat collector when collecting heat from the atmosphere by enlarging the surface area of the heat collector element (11a) and promotes the exchange of heat with air in contact with the surface of the heat collector (11). The auxiliary fin (38) is installed onto fin unit (26) from the front of the heat collector element (11a) at an acute angle "α". Such an acute angle "α" can be set by allowing the upper surface of the auxiliary fin (38) to incline downward from the tip portions that the upper part of the auxiliary fin (38) can be protected from water deposits and/or dust. Since the thermal media tubes (27) of the heat collector elements (11a) shown in Figure 7 (a), 7(c), and 7(e) are secured to the bottom surface of fin units (26), the front surface of fins (26) becomes almost flat by concealing the thermal media tubes (27) from the front surfaces. As a result, this provides a quite pleasing appearance when these are actually employed as part of the roofing material because the entire appearance is exactly identical to that of any conventional roofing materials. The fins of the heat collector can be made into such a shape shown in Figure 7 (b) via a rolling or pressing process against a thin sheet which is preliminarily surface-treated by coating, in addition to the extrusion process mentioned earlier. Next, the operation of the solar het collector system is described. Referring to Figure 4, gaseous heating media of high temperature and being compressed by the compressor (8) is led into the condensor (9) and exchanges heat with fluid (water) flowing through the liquid heater, and then the gaseous thermal media is condensed into a liquid, which is het-insulated, and expands itself when passing through the expansion valve (10). It is then decompressed to become non-evaporated thermal media of low temperature and low pressure. The thernal media is then fed into the heat collector (11) where it collects heat from sunbeams and the atmosphere so that it again turns into gas and enters into the compressor (8) before starting to repeat the same cyclic operations mentioned above. On the other hand, water stored in pool (13) is delivered to the fluid heater via the circulation pump (14), and after being heated by the fluid heater, hot water is again sent back to the water pool (13). Since the thermal media flowing through the thermal media tube of the heat collector (11) is of low temperature and low pressure, temperature in the solar heat collector (11) becomes lower than the atmospheric temperature. As a result, dew may be generated on the surface of the heat collector (11). However, dew gradually evaporates itself and also flows down so that it can be collected by the tub (36). Since the temperature of the heat collector (11) is lower than the atmospheric temperature, air flowing through space (30) behind the heat collector (11) is cooled, thus causing air to flow down due to varied specific gravity. Because of this, air from space (30) is sent out of the exhaust outlet (35). Conversely, due to the down-flow of air, atmospheric air is fed into space (30) from the upper ventilation inlet (34), thus promoting heat-exchange with atmospheric air behind the heat collector (11), and at the same time, heat is also collected from incoming air behind the heat collector (11). As described earlier, since the heat collector (11) is concurrently part of the roofing material, house construction workers can concurrently execute both the installation of the heat collector (11) and the roofing operation, thus greatly simplifying operation. Above all, after completing the installation work, the house provided with the solar heat collector embodied by the present invention will offer such a pleasant and neat appearance without objectionably being disturbed by presence of the heat collector.

The compressor (8) of the heat collector system is provided with variable capacity. The first temperature detector (17) is set to the inlet of the fluid heater (15) and the second temperature detector (18) to the outlet of this fluid heater (15), whereas the third temperature detector (21) is provided for detecting the temperature of fluid stored in the hot-water pool (13). The compressor capacity control circuit (19) that controls the capacity of the compressor (8) by using signals from these temperature detectors (17), (18) and (21) first detects the actual fluid temperature of the hot-water pool (13), and then computes the objective heating capacity in reference to the difference of temperature between the detected temperature and the objective temperature to be reached and also in reference to the remaining heating time from the present to the expected time at which the aimed temperature can be reached. The control circuit (19) also computes the heating capacity of the heat collector circuit (12) based on such temperature detected by the first and second temperature detectors (17,18) before eventually delivering the capacity control signal to the compressor (8) so that the heating capacity can correctly match the heating capacity being aimed at. The compressor capacity control circuits (19) is comprised of the objective temperature and heating time provider (19B), the main control circuit (19A), and the frequency converter circuit (20), respectively. The main control circuit (19A) computes the heating capacity based on the difference of temperature detected by the first and second detectors (17) and (18), and then outputs the control signal in response to the aimed heating capacity computed by the objective temperature and heating time provider (19B) and the third temperature detector (21). The frequency converter circuit (20) outputs the operative frequency signal to the compressor (8) in accordance with the signal sent out of the main control circuit (19A). The main control circuit (19A) is comprised of a single-chip microcomputer for example, which is internally provided with a data RAM, a program ROM, and ALU, and being driven by the clock oscillation circuit. The frequency converter circuit (14) is essentially made of an inverter circuit for example, which outputs such a signal converting the three-phase AC power frequency used by the motor that drives the compressor (8). Temperature detectors (17), (18), and (21) are comprised of thermistors for example. When voltage drops due to varied temperature, this is detected by these thermistors which then convert this data inot digital values for delivery to the main control circuit (19A). The objective heating capacity is determined by the following process. The aimed heating capacity is computed based on the heating load that can be determined by the presently available capacity of the hot-water pool and the remaining heating time which is actually the difference between the present time and the objective time at which the aimed temperature is reached.

Heating load = (aimed temperature - average fluid temperature of the hot-water pool at the present time) X presently available capacity of the hot-water pool

$$\text{Aimed heating capacity} = \frac{\text{Heating load}}{\text{Remaining heating time}}$$

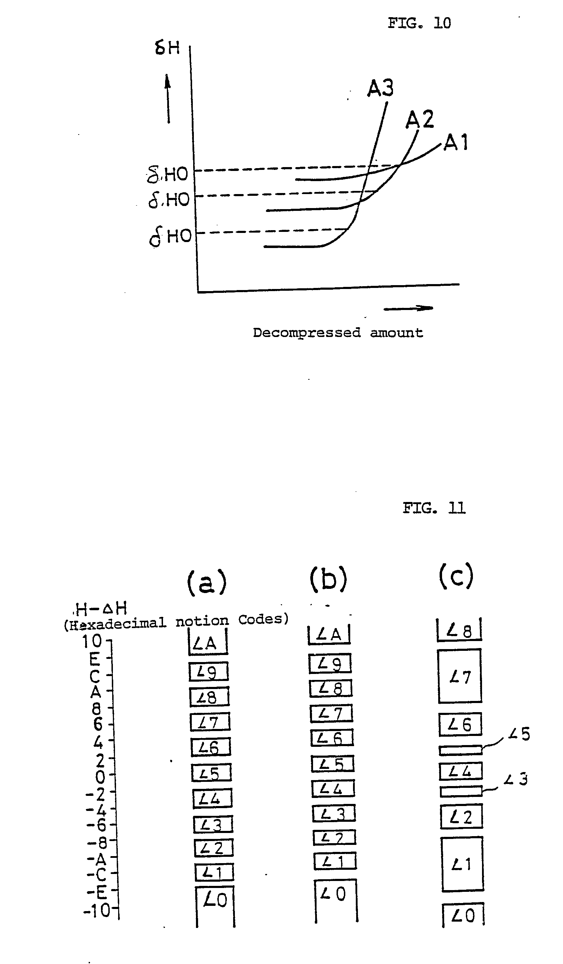

Data representing the actual temperature at the inlet and outlet of the fluid heater (15) is delivered to the main control circuit (19A) via the first and second temperature detectors (17) and (18), respectively. The main control circuit (19A) constantly senses the actual heating capacity based on the difference of temperature and the fluid volume which is preliminarily set at a constant level. By applying this method and being based on the average water temperature of the hot-water pool at present detected by the third temperature detector, and also in reference to the aimed temperature to be reached, the expected time at which the aimed temperature is reached, and to the present time, the control circuit (19) computes the aimed heating capacity, which is then delivered to the main control circuit for storage in the memory. The control circuit (19) then controls the rotational speed of the compressor (8) in response to varied atmospheric conditions and the conditions of the water that absorbs heat. When the sunbeams increase and the atmospheric temperature rises, and after the amount of heat has increased in the heat collector (11), the control circuit (19) causes the rotation of the compressor (8) to decrease, and as a result, the amount of load i.e., power consumption, can be reduced to drive the compressor (8) at a highly operative coefficiency. Conversely, when the amount of sunbeams decreases and the atmospheric temperature lowers, the control circuit (19) causes the rotational speed of the compresor (8) to increase, thus increasing the load of the compressor (8) until the aimed heating capacity can be reached. When fresh water is supplied to the hot-water pool while heat collection is underway, the hot water temperature will be lowered, thus causing the heating load to rise. To compensate for this, the number of rotations of the compressor (8) can be increased to strengthen the heating capacity. Figure (8) shows a flowchart describing the procedure needed for controlling these operations. Gaseous thermal media bearing high temperature and being pressurized by the compressor (8) flows into the condensor (9) in which gaseous thermal media exchange heat with fluid (water) flowing through the fluid heater (15) which remains in the heat-exchange relationship itself. Gaseous thermal media then condenses so that they again turn liquid. The condensor (9) and the fluid heater (15) are built together integrally, thus making up a dual-tube heat-exchanger in which the heat collector circuit and the fluid heating circuit cause fluid to run in the direction opposite from each other. The dual-tube heat-exchanger is provided with either narrow slits or a number of minute projections throughout the internal surface of the thermal media tube so that both the condensation and thermal transfer of the thermal media can be securely promoted. After being condensed by the condensor (9) and again turning into liquid, the thermal media is then insulated from heat and expands when passing through the expansion valve (10), and then it is decompressed before eventually becoming non-evaporated thermal media containing low temperature and low pressure. The expansion valve (10) employed for the solar heat collector system embodied by the present invention aims at effectively dealing with such widely and sharply variable heat collection conditions due to varying atmospheric temperature and the amount of sunbeams receivable. To achieve this, the expansion valve (10) is provided with a motor driver (10a) having a widely controllable range and quick response characteristics, which is mainly comprised of a stepping motor being operated by pulse signals from the control circuit (22). A fourth temperature detector (23) and a fifth temperature detector (24) are respectively set to the inlet and outlet of the heat collector (11) of the heat collector circuit (12). The control circuit (22) senses the difference in temperature between the inlet and outlet of the heat collector (11) detected by these before sending out signals to the motor driver (10a) for controlling the open-close operation of the expansion valve (10). Generally, any expansion valve performs decompression for controlling temperature of the inlet and outlet of the evaporator (heat collector) so that the difference in temperature (the overheated condition of thermal media) can be held constant. Although the solar heat collector system can also perform such a control operation mentioned above, since a capacity-variable compressor (8) is provided, control circuit (22) is specifically provided which is capable of adequately controlling the expansion valve (10) in conjunction with the capacity control signal against the compressor (8) in order for the difference in temperature at the inlet and outlet of the heat collector (11) to match the optimum target value of the difference in temperature which is variable in accordance with the varying capacity of the compressor (8). The method of controlling the expansion valve (10) is described below. Figure 9 is a block diagram of the control circuit (22), in which reference number 22a indicates the A/D converter that converts the analogue data of temperature T1 and T2 detected by the fourth and fifth temperature detectors (23) and (24) into digital values. Reference number 22b indicates the main control circuit of the microcomputer. The main control circuit (22b) first processes the decompression control signal for delivery to the driver (10a) of the expansion valve (10) in accordance with the preset program by referring to the digitally converted signals fed from the fourth and fifth temperature detectors (23) and (24) and also to the capacity signal from the compressor capacity control circuit (19) which shows the drive capacity of the compressor (8), and then the main control circuit (22-b) outputs the results to the output converter (22c) digitally. The output converter (22c) converts the received digital signal into one suited for properly driving the driver (10a) of the expansion valve (10) which uses the digital signals received from the main control circuit (22b).

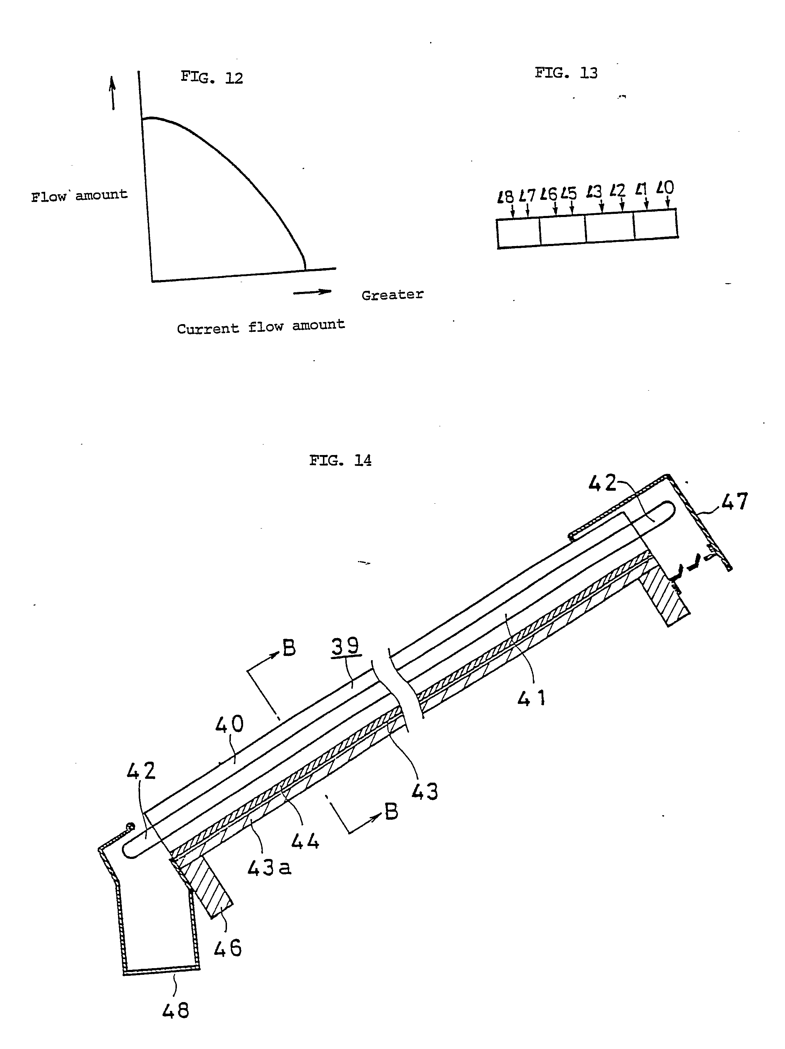

Referring now to Figures 10 through 13, operations of the control circuit (22) are described below. Figure 10 shows the difference in temperature δH at the inlet and outlet of the heat collector (11) detected by the fourth and fifth temperature detectors (23, 24) when the decompression amount of the expansion valve (10) varies while applying the heat-pump cycle (12) shown in Figure 4, in which the drive capacity of the compressor (8) is variable when a specific evaporation capacity is present in order that result A1 can be produced when the drive capacity is negligible, result A2 can be produced when the drive capacity is moderately avialable, and result A3 can be produced when the drive capacity is sufficiently available. Figure 10 indicates that, if the decomposition amount is insufficiently available, regardless of the drive capacity, a greater amount of thermal media than the evaporation capacity of the heat collector (11) will circulate, and then the thermal media cannot be fully evaporated in the heat collector (11). This will cause the thermal media to flow into the compressor (8) in the state partly bearing the liquid phase. During this stage, due to the lowered pressure in the tube connected to the fourth and fifth temperature detectors (23) and (24), the temperature of the thermal media lowers, whereas the difference of temperature δH becomes the negative δH against the optimum difference value HO, and it remains constant until a specific level od decompression is reached. Also, as the drive capacity of compressor (8) decreases, the amount of decompression decreases, too. As a result, the difference of temperature $\delta H$ in the negative phase nears to zero. Conversely, when accelerating the decompression, the amount of thermal media under circulation gradually decreases, thus causing an optimum amount of decompression to be generated by precisely equilibrating the freezing capacity inherent to the thermal media and the evaporation capacity of the heat collector (11). Accordingly, the aimed value $\Delta H$ of the temperature difference can be established within the practically allowable range centering the difference of temperature $\delta HO$ when the amount of decompression is optimum. On the other hand, the aimed value of the difference of temperature $\Delta H$ is established in the main control circuit (22b) in order that the function of Q proportional to the capacity data of the compressor (8) delivered to the main control circuit (22b) form the compressor capacity control circuit (20), as the primary function for example, can approximate the optimum temperature difference $\delta HO$. Therefore, the amount of decompression can be adjusted so that the difference of temperature $\delta H$ detected by the fourth and fifth temperature detectors (23, 24) can correctly match the aimed value $\Delta H$ of the difference of temperature which is to be determined by the drive capacity of the compressor (8). To achieve this, the following process has been introduced. First, the control circuit (22) divides the aimed value $\Delta H$ of the temperature difference and the difference $\delta H$ (hereinafter called "deviation") of the temperature to be detected into a plurality of zones. The control circuit (22) adjusts the decompression control signal for delivery to the driver (10a) of the expansion valve (10) so that the status of the transversal deviation can be held unchanged when the deviation transversely moves between these zones. The control circuit (22) also adjusts the decompression control signal for delivery to the driver (10a) of the expansion valve (10) to eliminate the deviation if it still remains in the same zone beyond a specific period of time, and as a result, the heat pump cycle (12) can always be held at the optimum condition. Figure (11) shows the method of dividing deviation ($\delta H$ - $\Delta H$) into zones, where the deviation is represented in the longitudinal axis as the digitalized amount in the hexadecimal notation. The methods shown in Figure 11 (a) and (b) respectively cause these zones to be divided at such intervals equal to each other. However, for easier identification of these zones in the microcomputer programs, such intervals may not always be equal to each other, as shown in Figure 11 (c). These zones may not be strictly symmetrical between the upper and lower parts against the line denoting "Deviation ($\delta H$ -$\Delta H$) = 0". Referring now to Figure 11 (c), operations of the control circuit (22) related to the method of dividing deviation inot zones are described below.

In this case, as shown in Figure 12, the expansion valve (10) normally remains closed. When gradually raising an output voltage which is substantially the decompression control signal against the driver (10a), the sectional area of the thermal media path decreases, and conversely, the decompression amount increases. For example, when performing a control operation corresponding to the proportional control using a linear control circuit, if the detected deviation was identified in zone L1 in the last step and in zone L2 while performing the heat pump cycle, even though there is an excessive flow of thermal media, the flow from the heat collector (11) tends to decrease . To restrain this tendency, a variable amount of current ($\Delta V2$) flowing into the driver (10a) of the expansion valve (10) is subtracted from the acutal current flow amount V to determine the correct current amount (VA) before delivery to the expansion valve (10) so that VA = V - $\Delta V2$). When the deviation detected in the next step is present in zone L3, the amount of current flow VA is adjusted so that VA equals to V - $\Delta V3$, thus causing the decompression amount of the expansion valve (10) to decrease. Conversely, when the deviation moves from zone L8 to zone L0, the amount of current flow VA is adjusted so that VA equals to V - $\Delta Vn$, causing the decompression amount of the expansion value to increase, constraining any variation of the deviation. In this case, the value of $\Delta Vn$ may be variable between each zone, or it may be set at the same value even when the deviation moves between any of these zones transversely. If the detected deviation moves to zone L4 for example from zone L1 directly, taking the distance into account, it is necessary to also adjust the amount of current flow VA according to the equation shown below.

$$VA = V - (\Delta V2 + \Delta V3 + \Delta V4)$$

Next, the control means corresponding to the integration control conventionally applied to a linear control circuit is described below.

In Figure 11 (c), if the deviation is present in zone L4, it is determined that no deviation is present to allow the amount of current flow to remain unchanged. If the deviation is present in any of zones L0 through L3, since the deviation is in the negative phase, the expansion valve (10) doesn't sufficiently reduce the pressure, it is necessary to increase the amount of current flow so that the decompression amount can be increased. Conversely, if the deviation is present is any of zones L5 through L8, it is necessary to decrease the amount of current flow. There are two kinds of control method. The first one causes the amount of current flow to vary when the deviation still remains in the same zone beyond a specific period of time. The other applies a substantial "weight" to such zones that are apart from zone L4 to cause the control circuit to compute such "weight" based on the history of such zones in which the deviation was present for a specific period of time, and then applying this value, the control circuit causes the amount of current flow to vary itself at specific intervals. When applying the first method, if the deviation still remains in zone L1 for a specific period of time, the control circuit (22) executes such an operation so that the renewed amount of current flow equals the sum of the former amount of current V and $\Delta V1$. If the deviation still remains in zone L8, operation is executed so that the renewed amount of current flow VA equals V - $\Delta V8$. If the deviation remains in any of zones L0 through L3, the renewed amount of current flow VA equals the sum of V and $\Delta Vn$. Conversely, if the deviation remains in any of zones L5 through L8, the renewed amount of current flow VA equals V - $\Delta Vn$. On the other hand, the variable amount $\Delta Vn$ becomes greater in each zone as the deviation leaves zone L4. The second method provides surveillance for a specific period of time against such zones where the deviation is still present. For example, it provides the 4-bit memory M. The control circuit (22) computes the deviation at such intervals (5 seconds for example) that can quickly deal with any variation of the condition of the heat pump cycle, and then in response to such a zone where the diviation was present, digit 1 is set, which corresponds to the designated bit number of the 4-bit memory M shown in Figure 13. After a specific period of time is past, the variable amount of current flow $\Delta Vn$ (see Table 1 that follows) determined by the bit pattern of the 4-bit memory M is added to the operation program so that the renewed amount of current flow VA equals the sum of the former amount of current flow V and $\Delta Vn$. This provides the control system with highly integrated control operations by applying such simple and short programs.

## TABLE 1

| | M | $\Delta V_n$ |
|---|---|---|
| 0 | 0000 | 0 |
| 1 | 0001 | $4 \Delta V$ |
| 2 | 0010 | $3 \Delta V$ |
| 3 | 0011 | $2 \Delta V$ |
| 4 | 0100 | $- 3 \Delta V$ |
| 5 | 0101 | $2 \Delta V$ |
| 6 | 0110 | 0 |
| 7 | 0111 | $2 \Delta V$ |
| 8 | 1000 | $- 4 \Delta V$ |
| 9 | 1001 | 0 |
| A | 1010 | $- 2 \Delta V$ |
| B | 1011 | $2 \Delta V$ |
| C | 1100 | $- 3 \Delta V$ |
| D | 1101 | $- 2 \Delta V$ |
| E | 1110 | $- 2 \Delta V$ |
| F | 1111 | 0 |

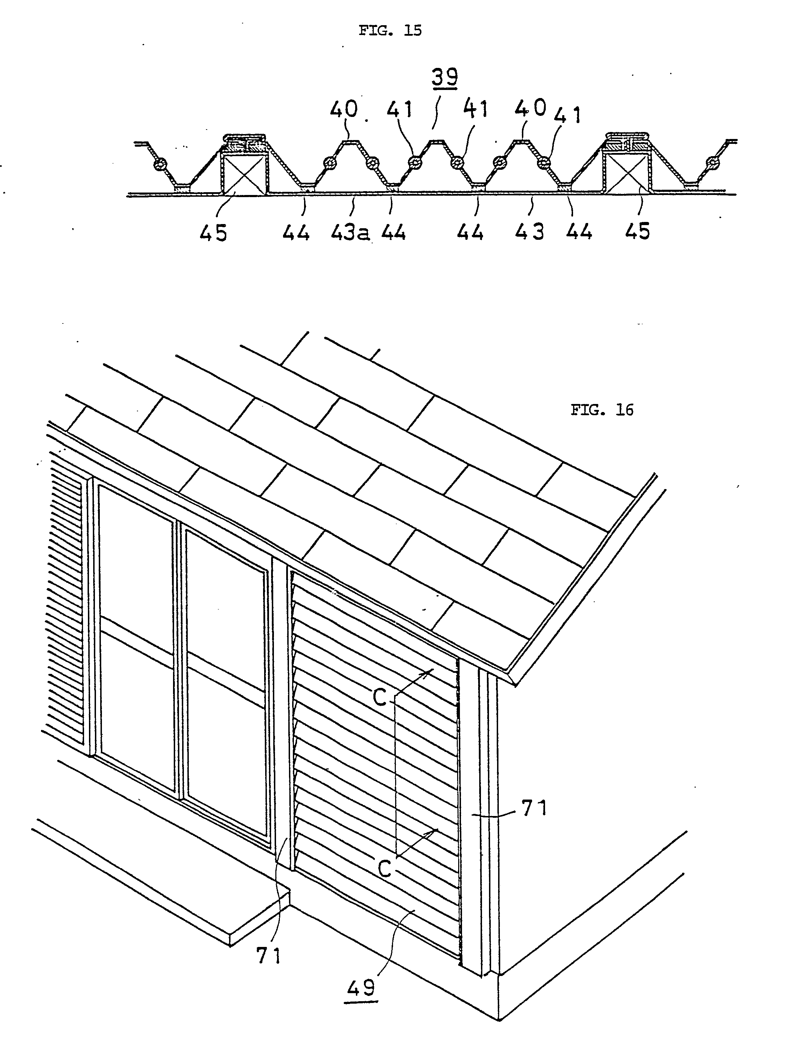

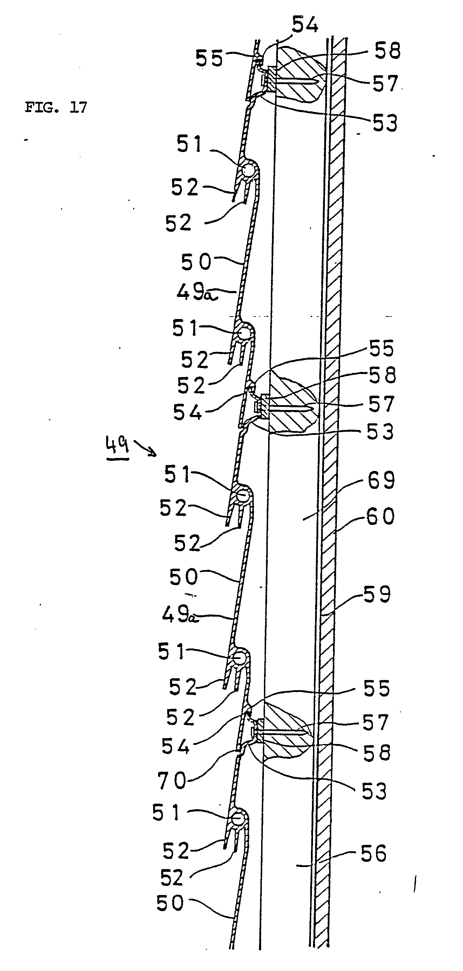

Another preferred embodiment of the present invention is described below. Figure 14 is the sectional view of another preferred embodiment of the heat collector integrated with the roof of a house. Figure 15 is the sectional view taken on line B-B of Figure 14. Different from the, heat collectors shown in Figures 5 through 7, this heat collector is an example of one of the vertically-mounted roof-integrated heat collectors in which thermal media tubes (41) are installed parallel to the roof gradient. Reference number (39) indicates a solar heat collector comprised of a zigzag-shaped fin unit (40) and a number of thermal media tubes formed in the middle part of the fin unit (40). These thermal media tubes (41) are respectively connected at their terminals to such thermal media tubes (41) which are coupled to the U-shaped connector tubes (42), thus forming a snaky path and concurrently functioning as the evaporator when the heat pump cycle operation is underway. The solar heat collector unit (39) is installed to the dew receiver sheet (43) located on the external sheet (43a) via an insulator member (44) made of synthetic rubber such as "Neoprene", thus concurrently functioning as roofing material. Reference number (45) indicates the roof-rod, (46) the nose-concealler, (47) the roof-peak protector and (48) a tub, respectively. Compared to the case of installing such a heat collector (25) split into a number of units as shown in Figures (5) through (7), the solar heat collector (39) introduced above can be installed very easily because of its advantageous sheet form. Since it can be intergrated into the housing structure, it can be effectively applied not only to the roof, but also to a variety of locations, such as the external wall, or the handrail of a balcony, veranda, or fence, etc. To begin with, one of the preferred embodiments of the heat collector integrally secured to the external wall is described below. Figure (16) is the perspective view of this embodiment, and Figure (17) is the sectional view of this embodiment taken on line B-B of Figure (16). The solar heat collector (49) that concurrently functions as the evaporator shown, in Figures 16 and 17, is installed onto the surface of the external wall of a house building, thus it also makes up part of the wall material. Although not shown in the drawings, the solar heat collector (49) makes up heat-pump cycles by performing the role of evaporator together with the compressor, condensor, and the expansion valve, while the heat collector (49) itself is made of thermally conductive material such as aluminum or copper, the external surface of which is finished with either dark color coating or colored aluminum oxide featuring durable weatherability, thus effectively promoting absorption of sunbeams. As shown in Figure 17, a solar heat collector element (49a) of the solar heat collector (49) is comprised of sheet-form heat collector fin unit (50), thermal media tubes (51) integrally formed with the fin unit (50) and auxiliary fins (52) integrally formed in the position extended from the thermal media tubes (51) and flush with the external surface of the heat collector (49).

A groove (53) that projects from the back of the heat collector element (49a) is provided at the tip end of the heat collector element (49a), while nail holes are provided in the center bottom of the groove (53) at specific intervals in the horizontal direction. An upper coupler (54) is provided at the upper end of the groove (53) and it projects upward. Also, a lower coupler (55) is provided on the back of the lower part of the heat collector element (49a) and it projects downward. The upper and lower heat collector elements (49a) are securely coupled to each other by engaging the upper coupler (54) with the adjacent lower coupler (55) of the lower heat collector element (49a). Reference number (56) indicates a square base wood vertically installed onto the external wall surface of the house building at specific intervals, while each heat collector element (49a) is secured to the square base wood (56) either with a nail (57) through the nail hole in the center of groove (53) or with a screw via packing made of synthetic rubber, such as "Neoprene".

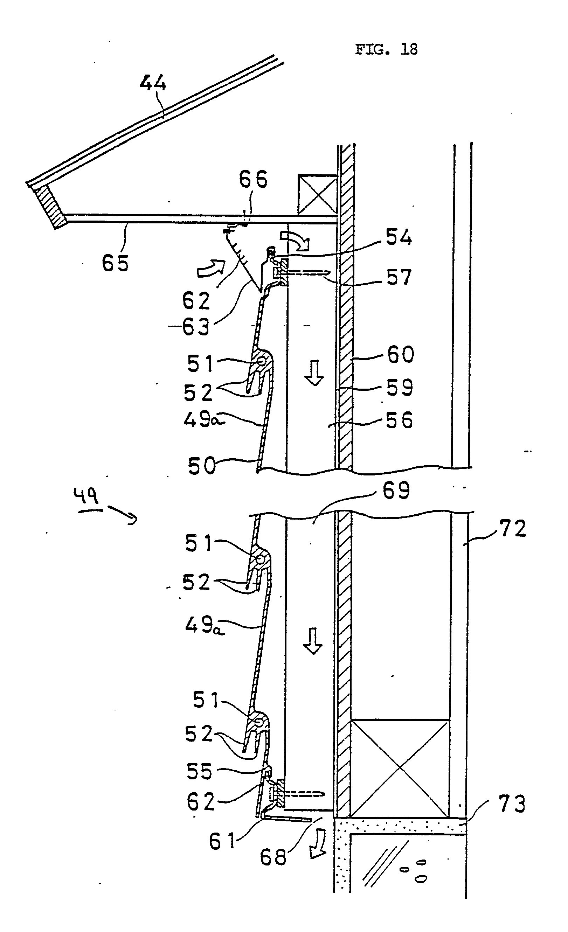

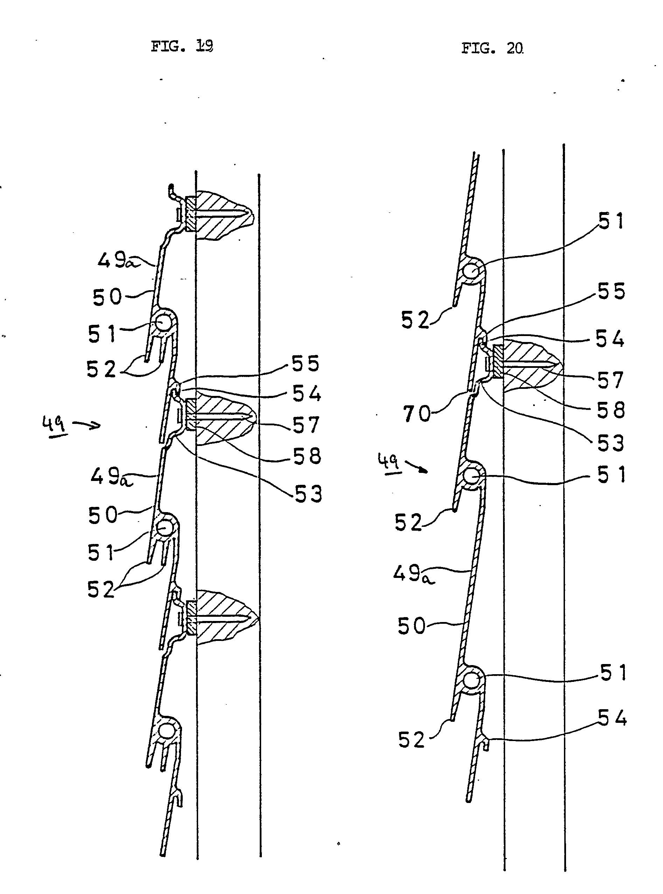

Reference number (59) indicates the water-proof layer made of water-proof paper or asphalt for example, and reference number (60) indicates a board secured to the rear surface of the water-proof layer (59). Figure (18) shows the bottom and tip parts of the sectional view of the installed heat collector (49). Reference number (61) indicates a metal peice set to the bottom part for supporting the heat collector (49). The lower coupler (55) of the heat collector element (49a) is engaged with the up-projected coupler (62) which is the upper branch of metal piece (61). The upper groove (53) of the heat collector element (49a) is secured to the base wood (56) with a nail so that the heat collector element (49a) can be securely installed. The adjacent heat collector element (49a) is also coupled to the lower-positioned heat collector element (49a) at its bottom part by means of couplers (54) and (55), whereas the upper groove (55) is secure to the base wood (56) with a nail (57) and in this way, a plurality of heat collector elements (49a) are sequentially set up, beginning with the bottom unit. Reference number (63) indicates the decorative sheet having its an end being connected to the upper coupler (54) of the heat collector element (49a) in the uppermost position and the other end being secured to metal (66) which is secured to the ceiling (65) of the roof structure (64). The decorative sheet (63) is provided with an opening (67) having a bent portion. The other opening (68) is provided between the heat collector support metal (61) located at the bottom part and the wall surface covered with a water-proof layer (59). Space (69) is formed between the base wood (56) secured to the wall surface (covered with water-proof layer 59) and the other adjacent base wood (56) at specific intervals. Space (69) makes up a path which allows air to flow through the back of the heat collector (49) and makes it possible to collect heat from air that flows through the back of heat collector (49). In other words, by adjusting the expansion valve, the heat-pumping heat collector (49) can adjust the refrigeration-media evaporation temperature of the heat collector (49) (which concurrently functions as an evaporator) below the atmospheric temperature, thus making it possible to absorb atmospheric heat together with the solar heat. In this case, since air passing through the back of the heat collector (49) is cooled by the heat collector sheet (50), air behind the heat collector (49) flows down and goes out of ventilator (68) installed in the bottom part. Conversely, since atmospheric air is internally fed from the upper ventilator (67), air flows in the arrowed direction as shown in Figure 18, thus making it possible to continuously collect heat from flowing air. However, compared to heat collection from air in contact with the surface of the heat collector (49), collection of heat from air passing through the back of the heat collector (49) cannot be done sufficiently because it collects heat which is cooled on the way. To compensate for this, auxiliary fin (52) is provided for promoting heat collection from the atmosphere, which is installed on the front surface of the heat collector (49). This is set to a position flush with the surface of the heat collector (49). The external auxiliary fin (52) is coupled to the heat collector fin (50) flush with the surface level, whereas the internal auxiliary fin (52) is concealed by the external auxiliary fin (52) and, as a result, the entire configuration of the auxiliary fin unit (52) is invisible externally. Each heat collector element (49a) is provided with a pair of thermal media tubes (51). When a pluality of heat collector elements (49a) are set up, all the thermal media tubes (51) are arranged at equal pitches. In addition, both the gradient and the dimensions of the heat collector fin (50) are designed so that the gradients and dimensions of each heat collector fin (50) are exactly identical on the surface independent of junctures connecting the adjacent heat collector elements (49a) to each other. In appearance, this configuration is quite similar to conventional wall materials (siding) having overlapped surfaces aligned at equal intervals with a specific gradient, and as a result, such a unique configuration of wall surface provides a neat and pleasing appearance. As described earlier, the solar heat collector unit (49) embodied by the present invention effectively collects heat from air even when the surface temperature is cooled below the atmospheric temperature. Due to the relationship between the temperature on the surface of the heat collector sheet and the atmospheric humidity, dew will be generated all over the surface of the heat collector (49). When a substantial amount of dew is generated, dew water flows down. Unlike such conventional metal-made wall materials having the up-bent juncture, the heat collector (49) which is integrally secured to the external wall dispenses with such a up-bent juncture, thus allowing dew water to flow down smoothly uninterrupted. In Figure 16, reference number (71) indicates a cover that conceals the tube juncture of the heat collector (49). In Figure 18, reference number (72) indicates the internal wall and (73) the base. Figure 19 is the sectional view of another preferred embodiment, in which a piece of the thermal media tube (51) is provided for a sheet-shaped heat collector (49).

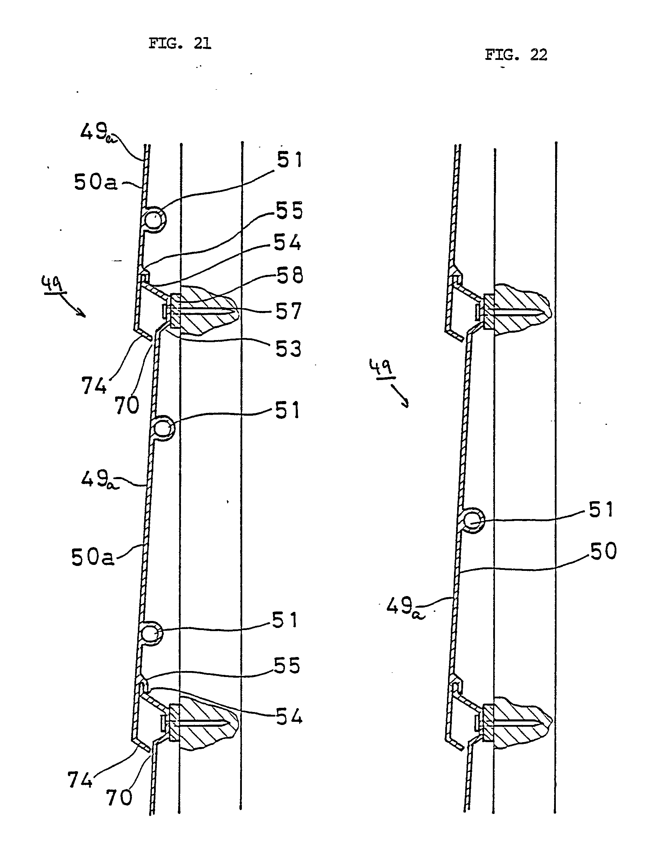

Figure 20 is the sectional view of a heat collector (49) reflecting another preferred embodiment, in which only a piece of the auxiliary fin (52) is provided for the surface of the heat collector (49) connected to a group of thermal media tubes (51). Figure 21 is also a sectional view of another preferred embodiment, in which no auxiliary fin is provided for the surface of the heat collector element (49a), and therefore, the heat collector element (49a) comprises a flat heat collector surface and thermal media tubes (51). Since no auxiliary fin is provided, the heat collection capacity from atmospheric air lowers slightly. However, since the juncture (70) between each heat collector element (49a) is provided at the tip portion of the bent part (74) in the bottom end of the heat collector fin (50a), all junctures (70) are invisible externally. Figure 22 is also a sectional view of the heat collector (49) with the auxiliary fin deleted, in which only one piece of thermal media tube (51) is provided for the heat collector element (49a). Next, typical examples of the preferred embodiments of the present invention incorporating heat collector elements into the house configuration, as the fence component of a balcony for example, are described below.

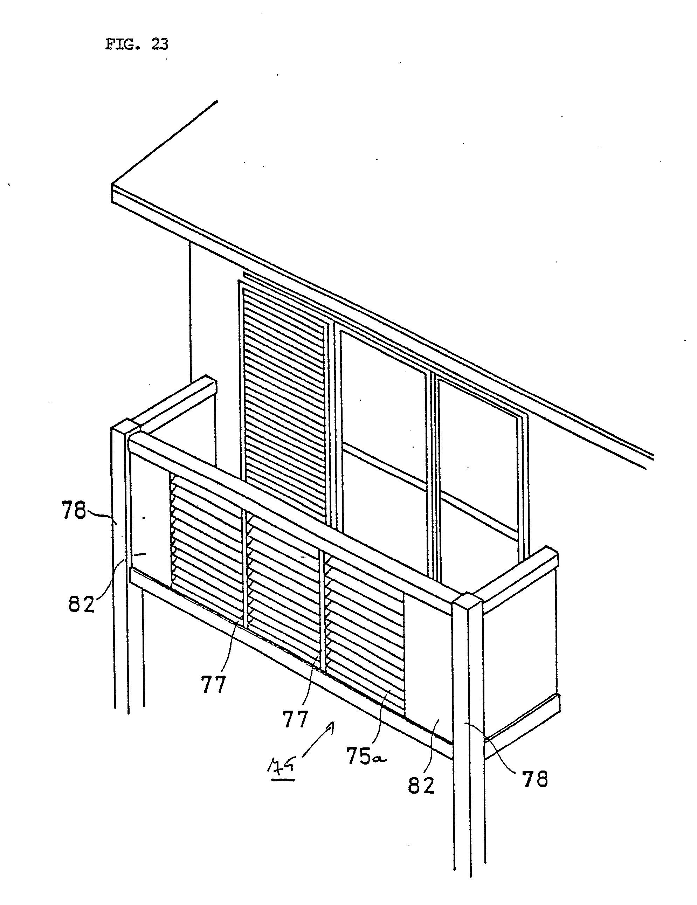

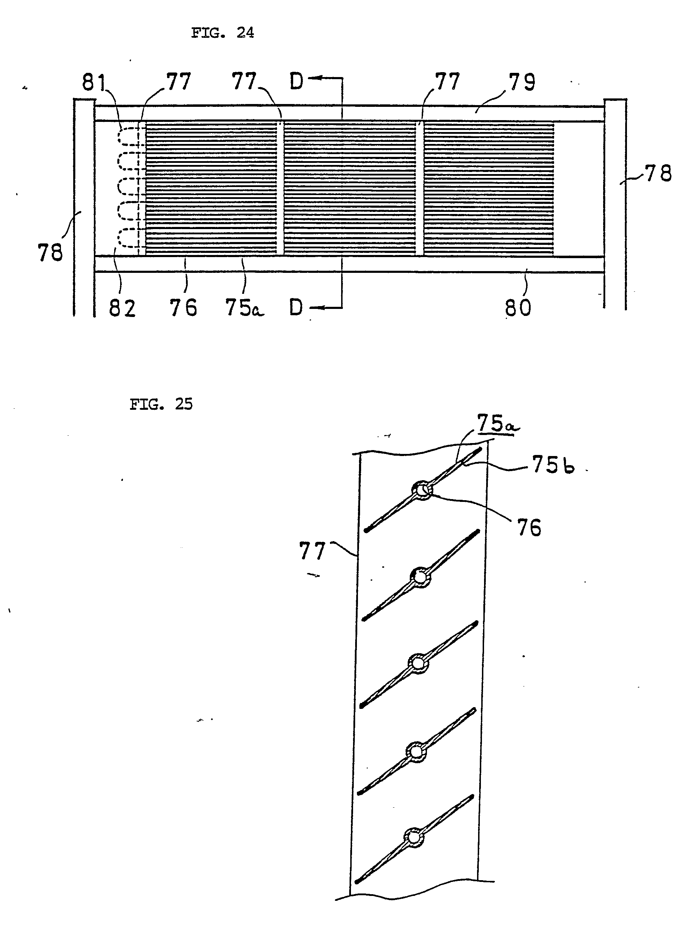

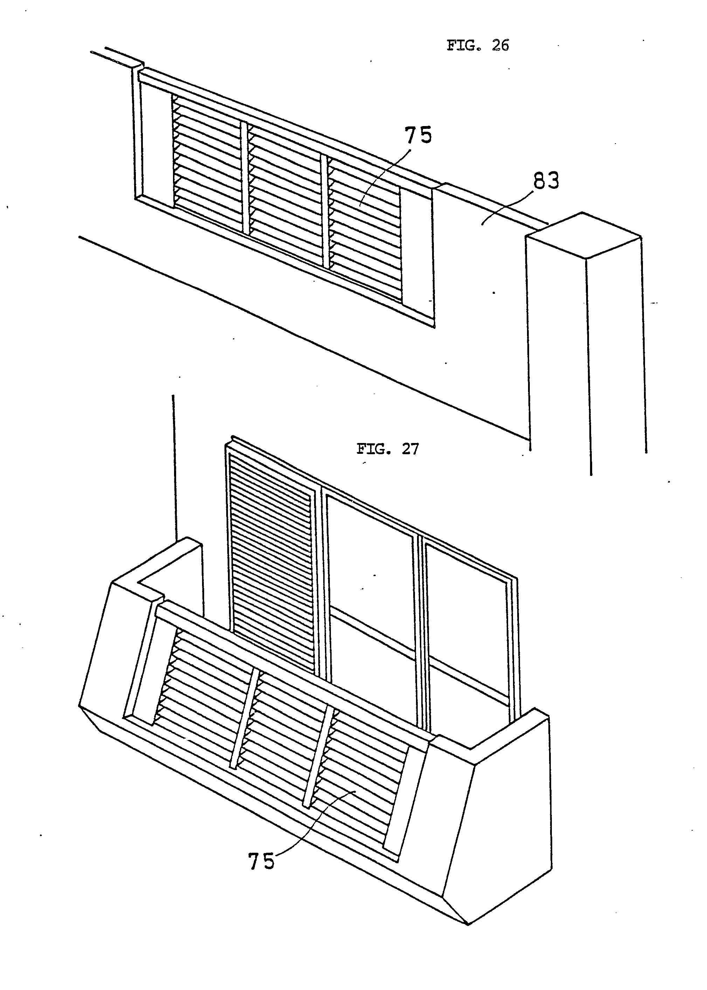

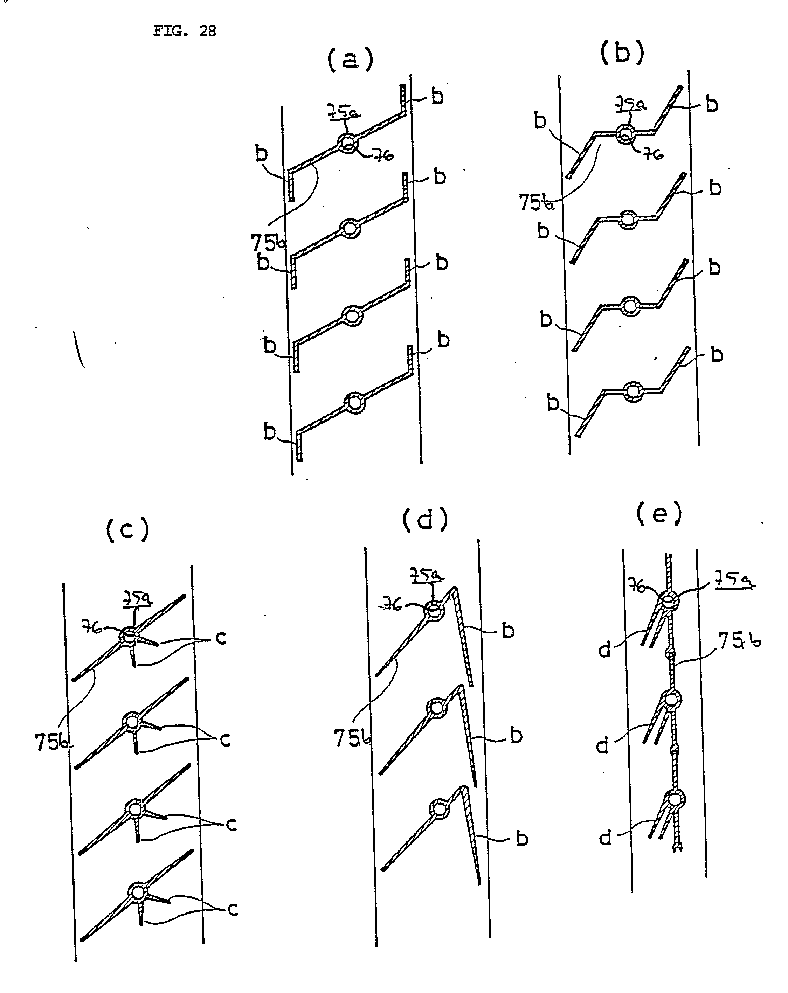

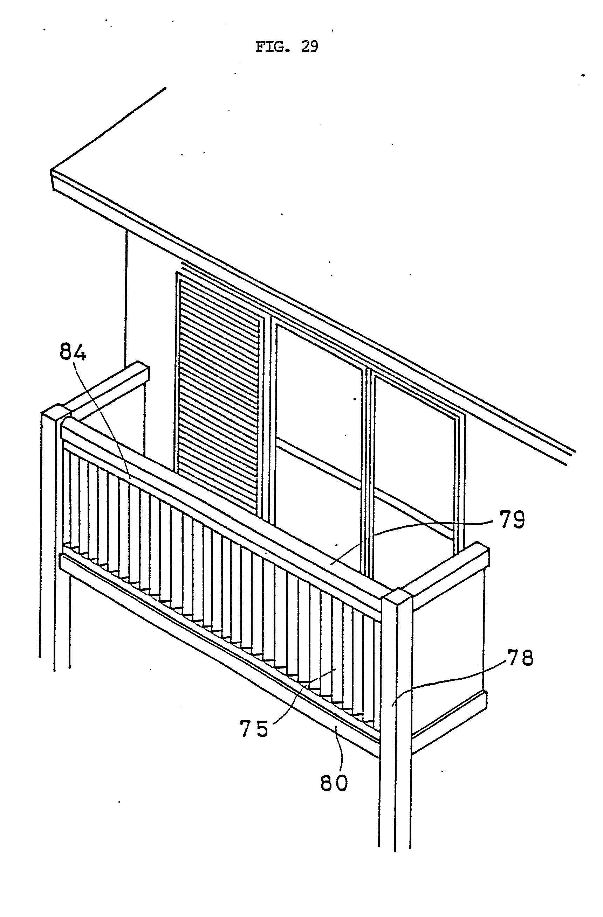

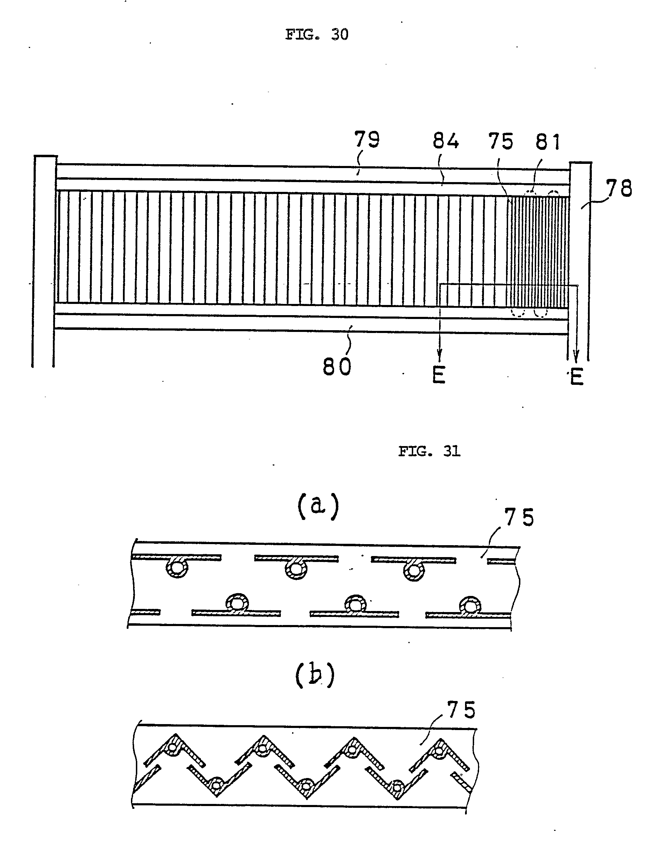

Figure 23 is the perspective view of the preferred embodiment related to the balcony configuration. Figure 24 denotes its front view, while Figure 25 is the sectional view taken on line D-D of Figure 24. In Figures 23, 24, and 25, reference number (75) indicates the solar heat collector that concurrently functions as the evaporator as well as the lattice of the balcony fence. Although not shown in the drawings, the solar heat collector elements (75a) of the heat collector (75) acting as the evaporators make up the heat pump cycles together with the compressor, condensor, and the expansion valve. The heat collector elements (75a) are comprised of a sheet-shaped fin (75b) made of thermally conductive materials such as either aluminum or copper and the thermal media tube (76) integrated with the sheet-shaped fin (75b) in the center of fin (75b), respectively. The external surface of the that collector element (75a) is finished with either a dark colored coating or colored aluminum oxide featuring durable weatherability, thus ensuring satisfactory absorption of heat from sunbeams. As shown in Figure (25), a plurality of heat collector elements (75a) are installed in the upper and lower positions with a specific gradient, whereas both ends and the center of the heat collector elements (75a) are secured to the support column (77) installed at specific intervals. The entire configuration serves as the fence or the lattice of a balcony. Figures 23 through 25 respectively show such a case in which the the heat collector elements (75a) have been integrally built with the balcony. Reference number 78 indicates the column of the balcony, 79 the upper frame, and 80 the bottom frame, respectively. Some space is provided on both ends of the heat collector element (75a) for storing tubes such as the U-shaped tube (81) connected to the thermal media tubes of each heat collector element (75a). Reference number 82 indicates a cover that conceals the tube assembly. The solar heat collector (75) integrated with the balcony should preferably be installed facing south so that it can sufficiently absorb heat from sunbeams and effectively collect atmospheric heat through the well ventilated configuration. Figure 26 shows another preferred embodiment, in which the heat collector has been integrally built with a fence bordering sites. Although not shown in the drawings, it is also possible to install the heat collector (75) integrally with the handrails of a veranda or flat top roof. Figure 27 shows another preferred embodiment of the heat collector (75) inegrated with a balcony structure, in which the

11

front surface of the balcony is provided with a specific gradient so that a greater amount of heat can be collected from sunbeams than is obtainable from a vertical surface. Figure 28 shows a still further embodiment of heat collector (75) whose sectional view is shown in Figure 25. The surface area of the heat collector fin (75b) can be expanded by providing the fin (75b) with a fold line (b) and also by adding a small fin (c) to the bottom part of the heat collector element (75a), thus promoting the capacity for collecting heat from the atmosphere (see Figure 28 (a), (b), and (d) as well). Figure 28 (e) shows such a case in which the heat collector fin (75b) is vertically installed so that the upper and lower fins can be coupled to each other, and, in addition, a third fin (d) provided with a phone angle is set to the external surface of the balcony. This effectively prevents children from climbing over the balcony by treading on the heat collector. Figure 29 is the perspective view of a still further preferred embodiment of heat collector integral with the balcony, while Figure 30 shows its front view. In this embodiment, the heat collector (75) is vertically installed so that it can be integrated with the lattice of the balcony, thus eliminating any concern about children climbing over. As shown in Figure 30, when the heat collector (75) is vertically installed, the U-shaped tubes are also vertically provided. Reference number 84 indicates the cover concealing the tube assembly. The cover (84) can be omitted by means of arranging the tubes inside the upper and lower support frames (79) and (80). In reference to the configuration of the sectional view taken on line E-E of Figure 30, as in the case of the horizontal arrangement, it is also possible to embody such configuration shown in either Figure 25 or Figure 28 (a), (b), and (d). Figure 31 (a) and (b) respectively show still further preferred embodiments of the sectional view taken on line E-E of Figure 30, in which a number of heat collectors are aligned in zigzag formation in two arrays opposite to each other. If these were aligned vertically, as shown in the E-E sectional configuration of Figure 25 and/or Figure 28 (a) and (b), due to the variable incident angle of sunbeams during the day, a relatively large amount of sunbeams would pass through the heat collector (75) during a specific period of time. Conversely, by employing those which are provided with a sectional configuration identical to those shown in Figure 28 (d) or Figure 31 (a) and (b), wasted sunbeams can be either minimized or totally eliminated without allowing them to pass through the heat collector (75).

Next, still further methods of controlling the capacity of the compressor (8) employed for the solar heat collector system are described below. One of these methods comprises the following: Referrring now to Figure 4, the first temperature detector (17) is provided at the inlet of the fluid heater (15) and the second temperature detector (18) at the outlet of the same fluid heater (15). In addition, a plurality of third temperature detectors (21) are provided for detecting the fluid temperature of the hot-water pool (13) at the time of starting the heat collection operation. The control circuit (19) that controls the capacity of the compressor (8) by means of signals from these first, second and third temperature detectors (17), (18), and (21), is provided. This control circuit (19) detects the fluid temperature of the hot-water pool (13) at the time of starting the heat collect operation based on the signal from the third temperature detectors (21); it then computes the aimed heating capacity in reference to the difference between the detected temperature and the aimed heating temperature and also in conjunction with the heat collect operation from the start-up time to the aimed time at which the expected temperature is reached, while the control circuit (19) also computes the heating capacity of the heat collector circuit (12) in reference to the temperature detected by the first and second temperature detectors (17) and (18), and finally outputs the capacity control signal to the compressor (8) so that the heating capacity can correctly reach the aimed heating capacity. The aimed heating capacity is determined by the following process. The aimed heating capacity is computed based on the heating load requirements that are determined in reference to the "difference" between water temperature stored in the hot-water pool (13) at the start-up of the heat collect operation and the storage capacity of the pool (13) and the "actual heat collecting time" that denotes the difference between the start-up time and the time at which the aimed temperature can be reached.

Heating load = (aimed heating temperature - water temperature of the pool (13) at the start-up of the heat collecting operation)

Aimed heating capacity = Heating load/Heat-collect operation time

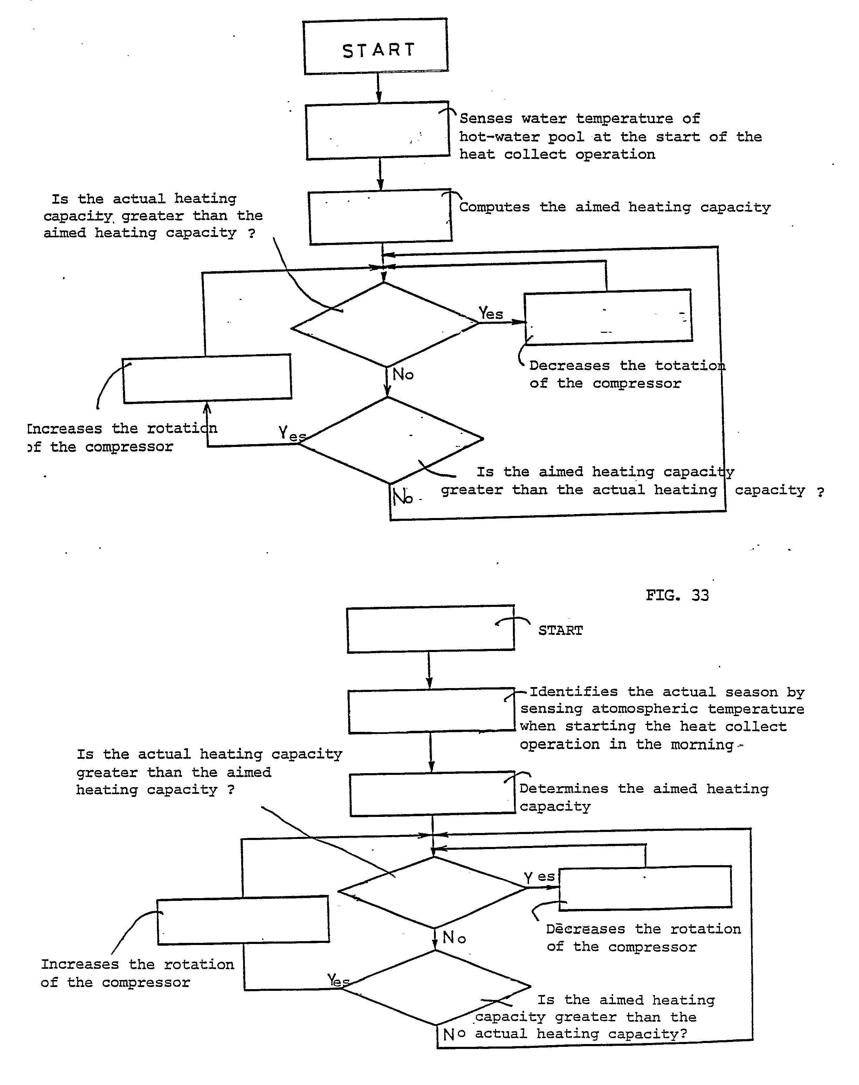

Figure 32 shows the control flowchart describing procedures for implementing the above control operations. A still further procedure is described below.

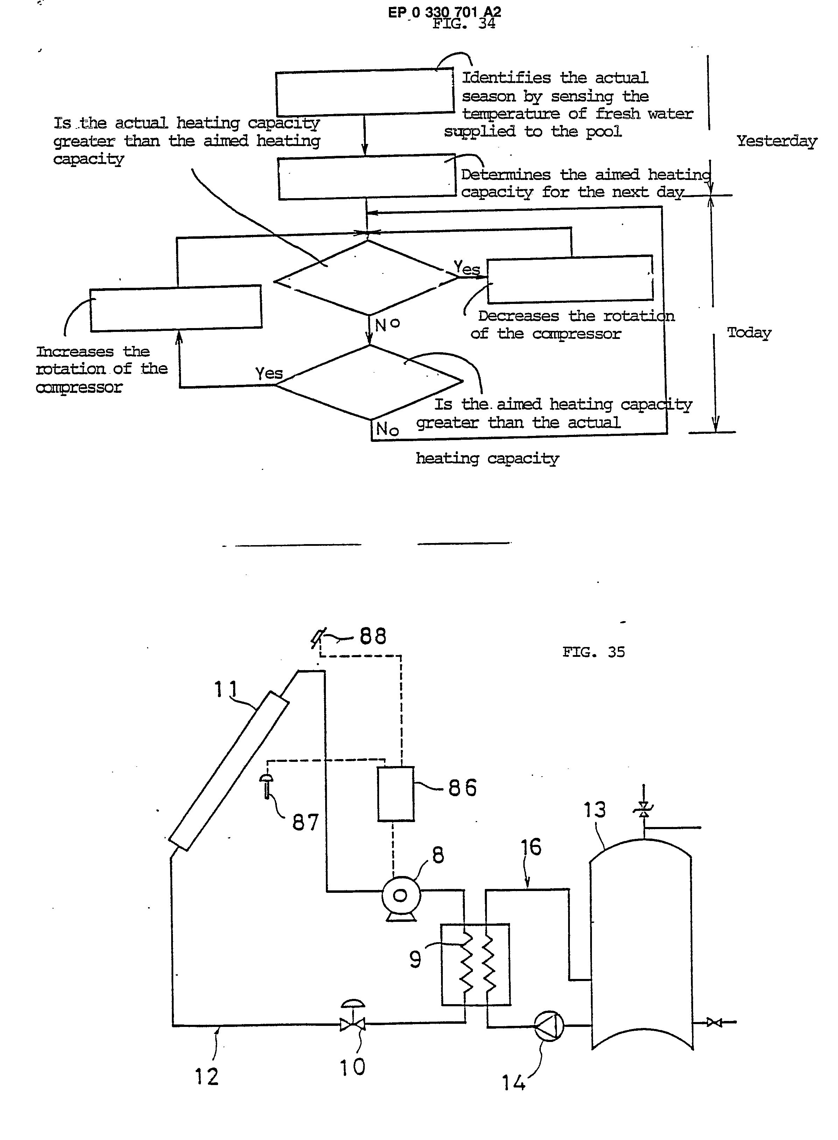

This procedure provides the atmospheric temperature detector (not shown) in place of the third temperature (21) detector that detects water temperature in the hot-water pool (13). The atmospheric temperature detector detects atmospheric temperature at a specific time in the morning to deliver this data to the control circuit (19), which then identifies the season using this atmospheric temperature data before eventually determining the variable objective heating capacity. Note that the capacity of the compressor (8) is controlled by the same method described before. The control flowchart is shown in Figure 33. The aimed heating capacity can also be determined by such means other than those which were described earlier. Instead of the atmospheric temperature detector, a replenished water temperature detector (85) is provided for the water tap (13a) of the hot-water pool (13). Using this temperature detector (85), the temperature of water supplied from the tap (13a) into the pool (13) on the previous day was sensed for identifying the actual season in advance. This enables the controller to automatically determine the aimed heating capacity before starting today's heat collection operation. Figure 34 shows the flowchart needed for implementing the operation just mentioned. As a still further means for properly controlling the capacity of the compressor, a typical example of controlling the capacity by means of sensing the atmospheric temperature and the amount of receivable sunbeams is introduced below. Figure 35 shows the schematic diagram of this means, in which the capacity of the compressor (8) is variable. The controller (86) controls the capacity of the compressor (8) by means of sensing the atmospheric temperature and the amount of receivable sunbeams, while the controller (86) reduces the rotation of the compressor (8) when the atmospheric temperature is higher and/or a large amount of sunbeams is available, and conversely, when the atmospheric temperature is low and the receivable amount of sunbeams is insufficient, the controller (86) raises the rotation of the compresor (8). According to the mechanism described above, the controller (86) effectively functions so that the solar heat collector system can ensure an optimum heat collect capacity precisely matching the water load requirements throughout the year. For example, during winter when a greater heating load is required for supplying hot water, the controller (86) causes the compressor (8) to raise the operative frequencies so that the heat collect capacity can be strengthened. Conversely, it causes the compressor (8) to lower the operative frequencies as well as its rotation during summer when the hot-water load is not always required, thus making it possible to reduce input against the compressor (8). Normally, depending on the amount of sunbeams radiated, the heat collect capacity is variable in daily operations. To compensate for this, the controller (86) causes the compressor (8) to slightly raise the operative frequencies when sunbeams are insufficiently available on cloudy or rainy days, while lowering the evaporation temperature of the heat collector in order to strengthen the capacity for collecting heat form the atmosphere.

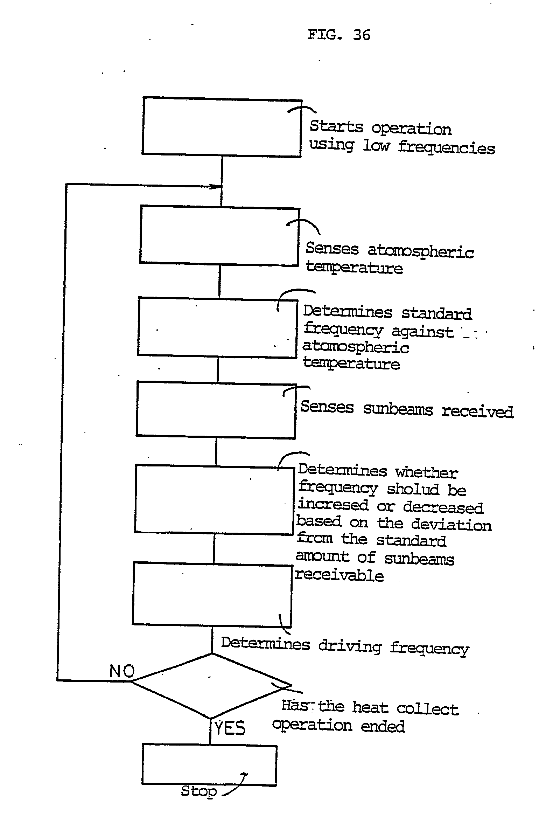

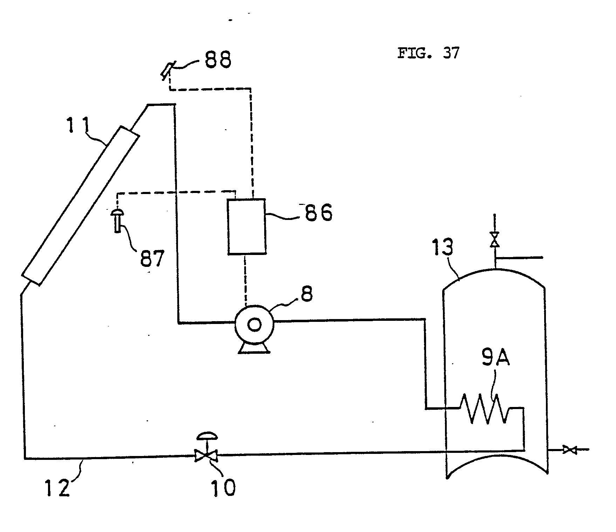

Conversely, the controller causes the compressor (8) to lower its operative frequencies during fine days when a large amount of sunbeams can be received, thus lowering the heat collect capactiy from the atmosphere by minimizing input against the compressor (8) so that heat can be received from sunbeams alone. Referring to Figure 35, reference number (86) indicates the control circuit which is provided with the frequency converter, (87) the atmospheric temperature sensor, and (88) the sunbeam sensor, respectively. The number of rotations of the compressor (8) is controlled by the frequency converter, while the controller (86) adjusts the operative frequencies of the compressor (8) to the optimum level, i.e., to the optimum number of the rotation on receipt of signals from the atmospheric temperature sensor (87) and the sunbeam sensor (88). Figure 36 shows the flowchart needed for properly controlling the operative frequencies. After the compressor (8) has been activated by the lowest frequency, on receipt of the atmospheric temperature data, the controller determines the standard operative frequency that correctly matches the atmospheric temperature before delivery to the compressor (8). For example, when the atmospheric temperature TO is equal to or higher than $30°$ C., the operative frequency is adjusted to 35Hz. If the atmospheric temperature TO is higher than $25°$ C. and Equal to or slightly lower than $30°$ C., then the operative frequency is adjusted to 46Hz. If the atmospheric temperature TO is higher than $20°$ C. and equal to or slightly lower than $25°$ C., the operative frequency is adjusted to 57Hz. If the atmospheric temperature TO is higher than $15°$ C. and equal to or slightly lower than $20°$ C., the operative frequency is adjusted to 68Hz. If the atmospheric temperature TO is higher than $10°$ C. and equal to or slightly lower than $15°$ C., the operative frequency is adjusted to 79Hz. If the atmospheric temperature TO is equal to or slightly lower than $10°$ C., then the operative frequency is adjusted to 90Hz. Next, the sensor system detects the amount of sunbeams radiated. If the amount of sunbeams (I) is more than the normally receivable sunbeams represented as Io≠ the operative frequency is lowered (Io = 30Ep/m•s = 250Kcal/m²h Conversely, if the radiated sunbeams (I) are les than Io, the controller causes the operative frequency to rise for the compressor (8). For example, if the amount of radiates sunbeams is represented by a formula Io + 2ΔI>I≥ Io + ΔI, th operative frequency is lowered by one step (corresponding to about 5.5Hz), and if it is I≥ Io+ 2ΔI, the operative frequency is lowered by two steps (about 11Hz). Conversely, if it is Io - 2ΔI<I≤Io - ΔI, the operative frequency is raised by one step, and if it is I≤Io - 2ΔI, the operative frequency is raised by two steps (ΔI≈12Ep/m•s = 100 Kcal/m²h). Needless to say, these operative frequencies are controlled within the allowable range, for example, form 30Hz to a maximum of 90Hz. Even if the heat collector system is internally provided with condensor 9A related to the heat pump cycle in the hot-water pool (13) by deleting the fluid circulation circuit as shown in Figure 37, the solar heat collector system can still correctly control the operative temperature and frequencies as was done by the operation mechanism described above. Of these, each heat collector is ideally formed so that it can concurrently perform dual roles as with a heat collector and housing material. In contrast to a variety of conventional heat collectors, the solar heat collector system embodied by the present invention features unique and attractive designs integrally matching the housing materials and external fittings, thus making it possible to perfectly preserve the beautiful appearance of the house building itself. In addition, since the present heat collector system concurrently plays dual roles as the heat collector itself as well as part of the housing material, it effectively reduces the total cost conventionally needed for the housing and installation of th heat collect system, thus significantly promoting economy. The compressor functions so that the heat control capacity can be properly controlled by converting the operative frequencies in response to the variable conditions of heating load and to conditions caused by seasonal factors. During the winter season, when a greater heating load is required but the heat-collect capacity is lower due to atmospheric conditions, the controller causes the compressor to raise the operative frequencies to strengthen the heat collect capacity. Con versely, during the summer season when the heating load can be greatly reduced and the heat collect capacity rises, the controller causes the compressor to lower its operative frequency level so that excessive heat collection can be prevented and the power consumption of the compressor can be lessened. Accordingly, the solar heat collector system features a unique heat collect capacity that can be adequately adjusted in response to the actual load requirements throughout the year, and, as a result, it dispenses with an auxiliary heating source even during winter when sufficient sunbeams cannot be received, thus providing an extremely high operative coefficient throughout the year. The expansion valve function as a squeezer unit is provided with a motor driver, which is controlled by the control circuit that first detects the difference in temperature at the inlet and outlet of the heat collector sensed by the fourth and fifth temperature detectors set to the inlet and outlet of the heat collector and then outputs control signals. The control circuit thus outputs control signals for controlling the decompression amount of the expansion valve so that the difference in temperature at the inlet and outlet of the heat collector can correctly match the aimed value designated by the capacity control signal sent from the capacity control circuit of the capacity-variable compressor.

The expansion valve effectively and quickly deal with any variation in heat collect conditions which are rapidly and widely variable when receiving sunbeams, and yet, since the expansion valve can be adequately controlled in conjunction with the capacity control signal from the capacity-controllable compressor, the entire heat pump cycles of the present solar heat collector system can be held constant under the optimum operative conditions.

## Claims

1. A heat collector, comprising:
- a plurality of elongated heat collector elements (11a; 39a; 49a; 75a) running parallel to each other, each heat collector element having at least one thermal media tube (27; 41; 51; 76) running in its longitudinal direction and allowing thermal media to pass through the inside, and sheet-form heat collector fins (26; 40; 50; 75b) connected to opposite sides of the thermal media tube for transferring heat,
- connector tubes (...; 42; ...; ...) for connecting the thermal media tubes of different heat collector elements to each other and to a heat collector driver system, and
- a support means for supporting said heat collector elements,
**characterized in** that the heat collector elements (11a; 39a; 49a; 75a) are constructed as parts which are normally used to build a house.

2. A heat collector as claimed in claim 1,**characterized in** that opposite longitudinal sides of the fins of adjacent heat collector elements (11; ...; 49a; 75a) are connected to each other (Figs. 5, 17-22, 28e).

3. A heat collector as claimed in claim 2, **characterized in** that the opposite longitudinal sides of the fins are integrally connected to each other to form a single fin unit (40) (Figs. 14, 15).

4. A heat collector as claimed in claim 2, **characterized in** that each heat collector element (11a) comprises on its opposite longitudinal sides of the fins (26) an U-shaped coupler (26a) extending upward and a lower U-shaped coupler (26b) extending downward, respectively, such that adjacent heat collector elements (11a) can be coupled together by engagement of upper and lower couplers (26a, 26b) (Fig. 5, 7).

5. A heat collector as claimed in claim 2, **characterized in** that each heat collector element (49a) comprises on opposite longitudinal sides of the fins (50) a groove (53) that projects from the back of the heat collector element (49a), said groove (53) is provided at its free end with an upper coupler (54), and a lower coupler (55), respectively, such that adjacent heat collector elements (49a) can be coupled together by engagement of upper and lower couplers (54, 55) (Figs. 17-22).

6. A heat collector as claimed in claims 4 or 5, **characterized in** that each heat collector element (11a; 49a) comprises two thermal media tubes (27; 51) (Fig. 7(d), (e), (g); 17, 20, 21).

7. A heat collector as claimed in claims 4, 5 or 6, **characterized in** that the thermal media tubes (27; 51) are installed onto the lower surface of the fins (26; 50) (Figs. 7(a), (c), (e-g); 17-22).

8. A heat collector as claimed in claim 7, **characterized in** that each heat collector element (26) comprises on its bottom surface an U-shaped supporting member (37), so that the supporting member (37) can be secured to the thermal media tube (27) (Fig. 7(c)).

9. A heat collector as claimed in one of the claims 2, 4 to 8, **characterized in** that each heat collector element (11a; 49a; 75a) comprises at least one auxiliary fin (38; 52; d) in the range of the thermal media tube (27; 51; 76) (Figs. 7(f), (g); 17-22; 28(c), (e)).

10. A heat collector as claimed in one of the claims 4, 6 to 9, **characterized in** that the heat collector elements (11a) are arranged horizontally, and that the support means is a roof construction of a housing (Figs. 5, 6).

11. A heat collector as claimed in claim 10, **characterized in** that the support means comprising a zigzag-shaped dew receiving sheet (28) behind the heat collector elements (11a) for providing air ventilation channels (30) running vertically downward (Figs. 5, 6).

12. A heat collector as claimed in claim 11, **characterized in** that the dew receiver sheet (28) supporting the heat collector elements (11a) via supporter member (29) made of a synthetic rubber material (Figs. 5, 6).

13. A heat collector as claimed in claims 11 and 12, **characterized in** that the support means comprising an outdoor plate (31) for carrying the dew receiver sheet (28), said outdoor plate (31) is supported by roof plate supporting rods (32) (Fig. 6).

14. A heat collector as claimed in claim 3, **characterized in** that the single fin unit (40) having bent portions running parallel to the thermal media tubes (41) such that a zigzag-shaped fin unit (40) is obtained, the thermal media tubes (41) are arranged vertically and in that the support means is a roof construction of a housing (Figs. 14, 15).

15. A heat collector as claimed in claim 14, **characterized in** that the single fin unit (40) is installed on a dew receiver sheet (43) located on an external sheet (43a) via an insulation member (44) made of synethetic rubber material (Figs. 14, 15).

16. A heat collector as claimed in claim 15, **characterized in** that the external sheet (43) is carried by roof-rods (45) (Fig. 15).

17. A heat collector as claimed in one of the claims 5 to 9, **characterized in** that the heat collector elements (49a) are arranged horizontally, and in that the support means is a wall construction of a house (Figs. 17-22).

18. A heat collector as claimed in claim 17, **characterized in** that the support means comprises vertically installed base woods (56) mounted on a wall (72) of a house via a water-proof layer (59), said heat collector elements (49a) are secured to the base woods (56) having a predetermined distance from each other either with nails (57) or screws running through a center hole in each groove (53) (Figs. 17-22).

19. A heat collector as claimed in claim 18, **characterized in** that the heat collector elements (49a) are secured to the base wood (56) via a synthetic rubber material (Figs. 17-22).

20. A heat collector as claimed in claims 1 or 2, **characterized in** that the support means is a frame (78, 79, 80) of a balcony (Figs. 23-28).

FIG. 1

FIG. 3

FIG. 2

FIG. 4

FIG. 5

FIG. 6

FIG. 7

FIG. 8

START

Senses water temperature of hot-water pool

Computes the aimed heating capacity

Is the actual heating capacity greater than the aimed heating capacity ?

Yes — Decreases the rotation of the compressor

No

Increases the rotation of the compressor

Y es

No — Is the aimed heating capacity greater than the actual heating capacity ?

FIG. 9

19

22

23 ○ → 22a → 22b

24 ○ →

22c → 10

FIG. 10

Decompressed amount

FIG. 11

FIG. 12

Flow amount

Greater

Current flow amount

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

75

83

FIG. 27

75

FIG. 28

(a)        (b)

(c)        (d)        (e)

FIG. 29

FIG. 30

FIG. 31

(a)

(b)

EP 0 330 701 A2

FIG. 32

Senses water temperature of hot-water pool at the start of the heat collect operation

Computes the aimed heating capacity

Is the actual heating capacity greater than the aimed heating capacity ?

Yes

No

Decreases the totation of the compressor

Increases the rotation of the compressor

Yes

No

Is the aimed heating capacity greater than the actual heating capacity ?

FIG. 33

START

Identifies the actual season by sensing atomospheric temperature when starting the heat collect operation in the morning

Determines the aimed heating capacity

Is the actual heating capacity greater than the aimed heating capacity ?

Yes

No

Decreases the rotation of the compressor

Increases the rotation of the compressor

Yes

No

Is the aimed heating capacity greater than the actual heating capacity?

Identifies the actual
season by sensing the
temperature of fresh water
supplied to the pool

Is the actual heating capacity
greater than the aimed heating
capacity

Determines the aimed heating
capacity for the next day

Yesterday

Yes

Decreases the rotation
of the compressor

No

Increases the
rotation of the
compressor

Yes

Today

Is the aimed heating capacity
greater than the actual

No

heating capacity

FIG. 35

FIG. 36

```
┌──────────────────┐
│                  │ ── Starts operation
│                  │    using low frequencies
└────────┬─────────┘
         │
  ┌──────┼───────────┐
  │      │           │
  │      ▼           │
  │ ┌──────────────┐ │
  │ │              │ │ ── Senses atmospheric
  │ │              │ │    temperature
  │ └──────┬───────┘ │
  │        │         │
  │ ┌──────┴───────┐ │
  │ │              │ │ ── Determines standard
  │ │              │ │    frequency against
  │ │              │ │    atmospheric
  │ └──────┬───────┘ │    temperature
  │        │         │
  │ ┌──────┴───────┐ │
  │ │              │ │ Senses sunbeams received
  │ └──────┬───────┘ │
  │        │         │
  │ ┌──────┴───────┐ │  Determines whether
  │ │              │ │  frequency sholud be
  │ │              │ │  incresed or decreased
  │ │              │ │  based on the deviation
  │ │              │ │  from the standard
  │ └──────┬───────┘ │  amount of sunbeams
  │        │         │  receivable
  │ ┌──────┴───────┐ │
  │ │              │ │
  │ └──────┬───────┘ │
  │        │   Determines driving frequency
  │        │
  │   NO ╱─┴─╲
  └─────     ─────  Has the heat collect
         ╲─┬─╱      operation ended
          YES
       ┌───┴────┐
       │        │
       │ Stop   │
       └────────┘
```

FIG. 37